# EUROPEAN PATENT APPLICATION

(11) **EP 2 511 491 A1**
(43) Date of publication of application: **17.10.2012**
(21) Application number: 12163752.4
(22) Date of filing: 11.04.2012
(51) Int. Cl.: F01N 3/035, F01N 3/025, F01N 9/00

(54) **Particulate matter filter and regeneration method for particulate matter filter**

(30) Priority: 11.04.2011 JP 2011087256
(71) Applicant: Toyota Jidosha Kabushiki Kaisha, Toyota-shi, Aichi-ken, 471-8571 (JP)
(72) Inventor: Yoda, Kimikazu, Aichi-ken, 471-8571 (JP)
(74) Representative: Albutt, Anthony John

(57) **Abstract**

In a particulate matter filter (3) that is provided in an exhaust passage (2) of an internal combustion engine (1) and that traps particulate matters in exhaust gas discharged from the internal combustion engine (1) when the exhaust gas passes through a wall portion (3a), a catalyst that has an ability to store oxygen is not arranged in the exhaust passage (2) upstream of the particulate matter filter (3), and a catalyst (4) that has the ability to store oxygen is coated on a downstream side surface of the wall portion (3a) of the particulate matter filter (3).

## Description

### BACKGROUND OF THE INVENTION

### 1. Field of the Invention

The invention relates to a PM filter (particulate matter filter) and a regeneration method for a PM filter.

### 2. Description of Related Art

Exhaust gas discharged from an internal combustion engine includes PM (particulate matters). A PM filter is used to trap this PM. The PM filter is a honeycomb structure that uses a porous wall portion. When either inlets or outlets of flow paths divided in a lattice pattern are closed off, and exhaust gas that flows into flow paths with closed-off outlets passes through the wall portion and flows out from flow paths with closed-off inlets, PM that was unable to pass through the porous wall portion becomes trapped. The PM trapped in the PM filter accumulates and clogs the filter, leading to adverse effects such as an increase in exhaust gas resistance and thus a deterioration of fuel efficiency. Therefore, Japanese Patent Application Publication No. 2006-161629 (JP 2006-161629 A), for example, describes technology that aims to forcibly regenerate a PM filter by burning off PM that has accumulated on the PM filter, when PM of a specified amount or more has accumulated on the PM filter.

With PM filter regeneration, typically a catalyst that has the ability to store oxygen is arranged upstream of the PM filter. Fuel is supplied to this catalyst to increase the temperature of the exhaust gas, thereby also increasing the temperature of the PM filter downstream of the catalyst to oxidize the PM. However, the oxygen concentration in the exhaust gas discharged from the internal combustion engine mounted in a stoichiometrically-controlled vehicle, in which the exhaust gas air-fuel ratio is controlled to near the stoichiometric air-fuel ratio, is low. If the temperature of the exhaust gas is increased by arranging a catalyst with the ability to store oxygen upstream of the PM filter as described above when there is not much oxygen in the exhaust gas in this way, the oxygen in the exhaust gas will end up being stored and used for a reaction in the catalyst that has the ability to store oxygen. As a result, there will not be enough oxygen for bonding with the PM to oxidize the PM in the PM filter downstream of the catalyst. That is, it becomes difficult to ensure the oxygen necessary to regenerate the PM filter.

On the other hand, if an apparatus for heating the PM filter without consuming oxygen, such as an electric heater or the like, is provided separately, the cost will end up increasing.

### SUMMARY OF THE INVENTION

The invention thus provides technology that regenerates a particulate matter filter (PM filter) by using oxygen efficiently.

A first aspect of the invention relates to a particulate matter filter that is provided in an exhaust passage of an internal combustion engine and that traps particulate matters (PM) in exhaust gas discharged from the internal combustion engine when the exhaust gas passes through a wall portion. In this particulate matter filter, a catalyst that has an ability to store oxygen is not arranged in the exhaust passage upstream of the particulate matter filter, and a catalyst that has the ability to store oxygen is coated on a downstream side surface of the wall portion (i.e., the back surface of the wall portion) of the particulate matter filter.

According to this aspect of the invention, a catalyst that has the ability to store oxygen is not arranged in the exhaust passage upstream of the particulate matter filter, so oxygen in exhaust gas discharged from the internal combustion engine is not stored or used for a reaction upstream of the particulate matter filter. Therefore, amount of oxygen that flows into the particulate matter filter can be ensured to the fullest. Also, a catalyst that has the ability to store oxygen is coated on the downstream side surface of the wall portion of the particulate matter filter. Therefore, oxygen is first able to bond with the particulate matters that, being unable to pass through the wall portion of the particulate matter filter, accumulated on the upstream side surface of the wall portion (i.e., the front surface of the wall portion). Moreover, particulate matters are able to be oxidized if the temperature of the particulate matter filter is the particulate matter self-combustion temperature (PM self-combustion temperature). Also, oxygen not consumed in the oxidation of the particulate matters passes through the wall portion of the particulate matter filter and is supplied to and stored in the catalyst that has the ability to store oxygen and is coated on the downstream side surface of the wall portion. As a result, the catalyst that has the ability to store oxygen generates heat using the oxygen and the reducing gas in a reaction, so the particulate matter filter is able to be heated. In this way, when the particulate matter filter is heated using oxygen that was not consumed in the oxidation of the particulate matters in the particulate matter filter, and the temperature of the particulate matter filter becomes equal to or greater than the particulate matter self-combustion temperature, the oxygen that flows into the particulate matter filter is consumed in the oxidation of the particulate matters, so the particulate matter filter is able to be regenerated, and the oxygen is able to be used efficiently. Therefore, the particulate matter filter is able to be regenerated by using the oxygen efficiently. Also, according to this aspect, an apparatus for heating the particulate matter filter without consuming oxygen, such as an electric heater, is not provided separately, so a cost increase is able to be suppressed.

The particulate matter filter having the structure described above may be regenerated by an exhaust gas air-fuel ratio being alternately changed to a rich side and a lean side.

According to this structure, a large amount of oxygen included in the exhaust gas when the exhaust gas air-fuel ratio is controlled in the lean side is able to bond with the particulate matters, and thus oxidize the particulate matters, as well as be supplied to and stored in the catalyst that has the ability to store oxygen and is coated on the downstream side surface of the wall portion of the particulate matter filter. Also, reducing gas such as HC, CO, or H₂, for example, that is discharged from the internal combustion engine when the exhaust gas air-fuel ratio is controlled in the rich side is supplied to the catalyst that has the ability to store oxygen and is coated on the downstream side surface of the wall portion of the particulate matter filter. As a result, an oxidation reaction takes place between the reducing gas and the oxygen supplied to and stored in the catalyst that has the ability to store oxygen and is coated on the downstream side surface of the wall portion of the particulate matter filter. This oxidation reaction generates oxidation reaction heat that enables the particulate matter filter to be heated early on. Also, when the particulate matter filter is heated early on and the temperature of the particulate matter filter becomes equal to or greater than the particulate matter self-combustion temperature, the large amount of oxygen that is included in the exhaust gas when the exhaust gas air-fuel ratio is controlled in the lean side bonds with the particulate matters and is consumed in the oxidation of the particulate matters, thereby enabling the particulate matter filter to be regenerated early on. In this way, according to this structure, the particulate matter filter is able to be heated early on, so the particulate matter filter is able to be regenerated early on.

In the particulate matter filter having the structure described above, a catalyst that does not have the ability to store oxygen may be coated on an upstream side surface of the wall portion of the particulate matter filter.

The catalyst that does not have the ability to store oxygen is unable to store oxygen, so an oxidation reaction takes place when oxygen and a reducing gas such as HC, CO, or H₂ are simultaneously supplied, without much oxygen being consumed. As a result, with this structure, the catalyst that does not have the ability to store oxygen and is coated on the upstream side surface of the wall portion of the particulate matter filter generates oxidation reaction heat, thereby enabling the particulate matter filter to be heated earlier, without consuming much oxygen.

With the particulate matter filter having the structure described above, cylinder-by-cylinder air-fuel ratio control may be executed to regenerate the particulate matter filter when a temperature of the particulate matter filter is lower than a particulate matter self-combustion temperature, wherein in the cylinder-by-cylinder air-fuel ratio control, at least one of cylinders from among a plurality of cylinders of the internal combustion engine is controlled such that an exhaust gas air-fuel ratio is richer than a target exhaust gas air-fuel ratio, and at least one other cylinder is controlled such that an exhaust gas air-fuel ratio is leaner than the target exhaust gas air-fuel ratio.

When the temperature of the particulate matter filter is lower than the particulate matter self-combustion temperature, particulate matters do not readily bond with oxygen, so particulate matters are not easily oxidized. Therefore, it is desirable to heat the particulate matter filter earlier. With this structure, at least one of the cylinders are controlled so that the exhaust gas air-fuel ratio is richer than the target exhaust gas air-fuel ratio, such that the exhaust gas includes a large amount of reducing gas such as HC, CO, or H₂, for example. Meanwhile, at least one other cylinder is controlled so that the exhaust gas air-fuel ratio becomes leaner than the target exhaust gas air-fuel ratio, such that the exhaust gas includes a large amount of oxygen. This kind of exhaust gas that includes large amounts of both oxygen and reducing gas can be supplied to the particulate matter filter. As a result, at the catalyst that does not have the ability to store oxygen and is coated on the upstream side surface of the wall portion of the particulate matter filter, large amounts of oxygen and reducing gas are simultaneously supplied, such that an oxidation reaction takes place, generating high oxidation reaction heat. Also, at the catalyst that has the ability to store oxygen and is coated on the downstream side surface of the wall portion of the particulate matter filter as well, large amounts of oxygen and reducing gas are simultaneously supplied, such that an oxidation reaction takes place, generating high oxidation reaction heat. As a result, the particulate matter filter is able to be heated earlier.

In the particulate matter filter having the structure described above, the particulate matter self-combustion temperature may be 580°C.

In the particulate matter filter having the structure described above, the cylinder-by-cylinder air-fuel ratio control may not be executed when the temperature of the particulate matter filter is lower than a catalyst light-off temperature that is lower than the particulate matter self-combustion temperature, even if the temperature of the particulate matter filter is lower than the particulate matter self-combustion temperature.

In the particulate matter filter having the structure described above, the catalyst light-off temperature may be 230°C.

In the particulate matter filter having the structure described above, the particulate matter filter may be regenerated by the exhaust gas air-fuel ratio being alternately changed to the rich side and the lean side when the temperature of the particulate matter filter is higher than the particulate matter self-combustion temperature and equal to or lower than a temperature that is an excessively high temperature that is higher than the particulate matter self-combustion temperature.

In the particulate matter filter having the structure described above, the temperature that is the excessively high temperature may be 780°C.

In the particulate matter filter having the structure described above, the particulate matter filter may be such that a coating amount of the catalyst that has the ability to store oxygen becomes less from a filter outer peripheral portion of the particulate matter filter toward a filter center portion of the particulate matter filter.

A second aspect of the invention relates to a regeneration method for a particulate matter filter that is provided in an exhaust passage of an internal combustion engine and that traps particulate matters in exhaust gas discharged from the internal combustion engine when the exhaust gas passes through a wall portion, and in which a catalyst that has an ability to store oxygen is not arranged in the exhaust passage upstream of the particulate matter filter, and a catalyst that has the ability to store oxygen is coated on a downstream side surface of the wall portion of the particulate matter filter. This regeneration method regenerates the particulate matter filter by alternately changing an exhaust gas air-fuel ratio to a rich side and a lean side.

Also, in the regeneration method for a particulate matter filter according to the aspect described above, the particulate matter filter may be such that a catalyst that does not have an ability to store oxygen is coated on an upstream side surface of the wall portion of the particulate matter filter, and the particulate matter filter may be regenerated by controlling at least one of cylinders from among a plurality of cylinders of the internal combustion engine such that an exhaust gas air-fuel ratio is richer than a target exhaust gas air-fuel ratio, and controlling at least one other cylinder such that an exhaust gas air-fuel ratio is leaner than the target exhaust gas air-fuel ratio, when a temperature of the particulate matter filter is lower than a particulate matter self-combustion temperature.

The regeneration method for a particulate matter filter according to the second aspect described above also enables a particulate matter filter to be regenerated by using oxygen efficiently.

According to the aspects and structures of the invention described above, a particulate matter filter is able to be regenerated by using oxygen efficiently.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view of the general structure of an internal combustion engine according to a first example embodiment of the invention;
FIG. 2 is a detailed view of a PM filter according to the first example embodiment;
FIG. 3 is a view of exhaust gas air-fuel ratio control during filter regeneration control according to the first example embodiment;
FIG. 4 is a view of the behavior of oxygen when filter regeneration control according to the first example embodiment is executed;
FIG. 5 is a detailed view of a PM filter according to a second example embodiment of the invention;
FIG. 6 is a view of exhaust gas air-fuel ratio control during filter regeneration control when the estimated temperature of the PM filter is lower than a PM self-combustion temperature according to the second example embodiment;
FIG. 7 is a view of the behavior of oxygen when filter regeneration control is executed when the estimated temperature of the PM filter is lower than the PM self-combustion temperature according to the second example embodiment;
FIG. 8 is a view of the behavior of oxygen when filter regeneration control is executed when the estimated temperature of the PM filter is equal to or higher than the PM self-combustion temperature according to the second example embodiment;
FIG. 9 is a view of the distribution of a catalyst that has the ability to store oxygen in a PM filter according to a third example embodiment of the invention; and
FIG. 10 is a view of exhaust gas air-fuel ratio control during filter regeneration control when the estimated temperature of the PM filter is equal to or higher than a PM self-combustion temperature according to the third example embodiment.

### DETAILED DESCRIPTION OF EMBODIMENTS

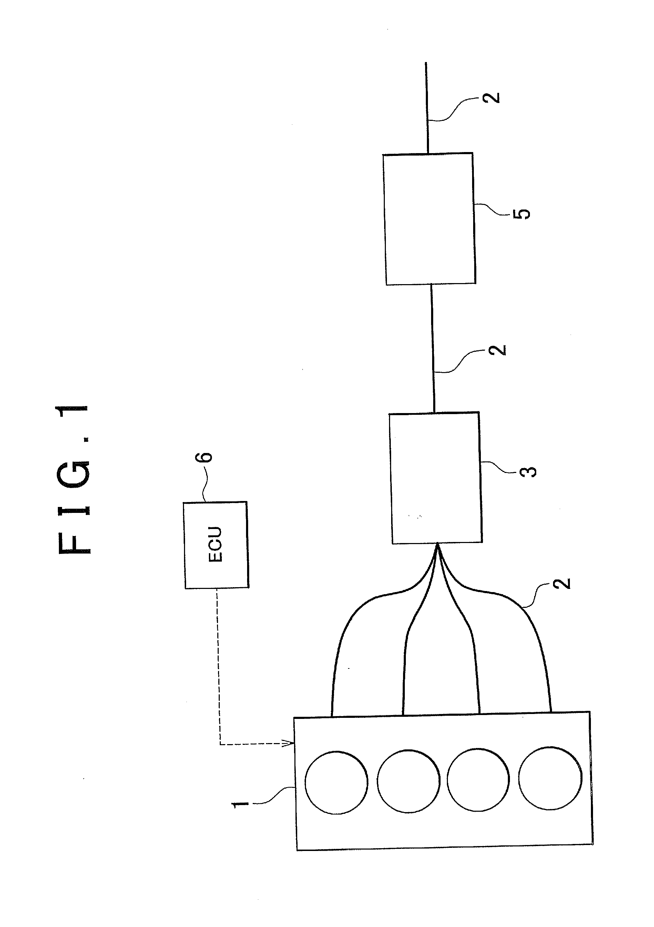

FIG. 1 is a view of the general structure of an internal combustion engine to which a PM filter (particulate matter filter) according to a first example embodiment of the invention is applied. The internal combustion engine 1 shown in FIG. 1 is a water-cooled four-stroke gasoline engine with four cylinders. The internal combustion engine 1 is mounted in a vehicle. Because the internal combustion engine 1 is a gasoline engine, this vehicle is a stoichiometrically-controlled vehicle in which exhaust gas control is performed with a catalyst such as a three-way catalyst by controlling the exhaust gas air-fuel ratio of the internal combustion engine 1 during normal running to near the stoichiometric air-fuel ratio. The internal combustion engine 1 may also be another type of internal combustion engine, such as a diesel engine. In this case as well, stoichiometric control may also be performed.

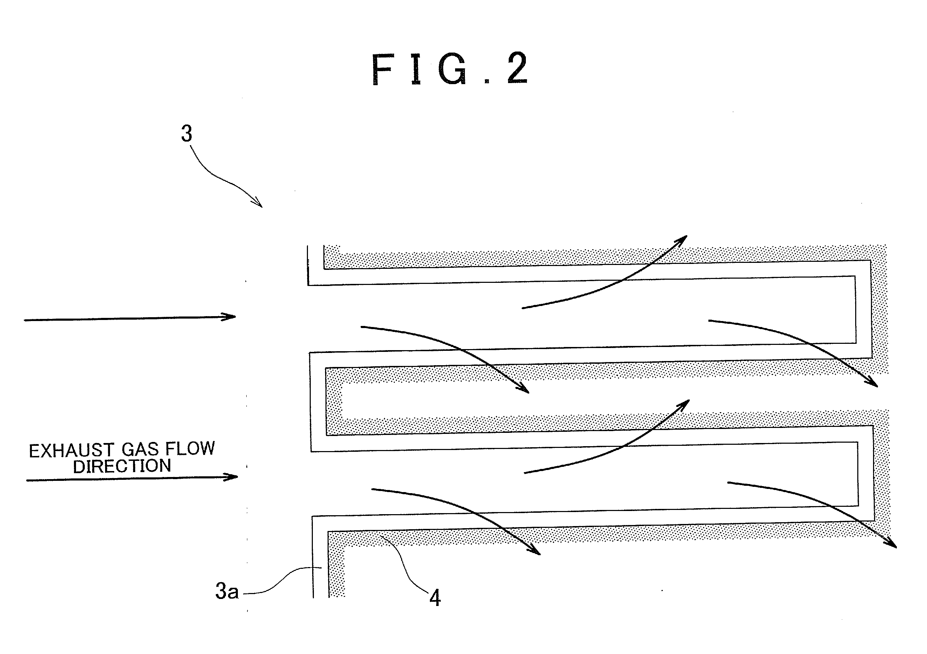

An exhaust passage 2 is connected to the internal combustion engine 1. A PM filter 3 is arranged in the exhaust passage 2. The PM filter 3 traps PM (particulate matters) in the exhaust gas that is discharged from the internal combustion engine 1 and flows through the exhaust passage 2. The PM filter 3 uses a cell wall 3a (see FIG. 2) of a heat resistant ceramic base material, such as cordierite, that is a honeycomb structure for a wall portion. The PM filter 3 is configured such that either inlets or outlets are closed off in an alternating manner with respect to multiple cells that serve as exhaust gas flow paths. The cell wall 3a of the PM filter 3 is a porous wall portion that has porosity. Exhaust gas that has flowed into the PM filter 3 flows into flow paths with closed outlets, and then flows downstream while passing through the cell wall 3a, after which it flows out from flow paths with closed inlets. During this time, PM is trapped in the holes and on the cell wall surface of the cell wall 3a and accumulates. That is, PM is trapped in the PM filter 3 when the exhaust gas passes through the cell wall 3a of the PM filter 3.

FIG. 2 is a detailed view of the PM filter 3 according to this example embodiment. As shown in FIG. 2, a catalyst 4 that has the ability to store oxygen is coated on a downstream side surface of the cell wall 3a (i.e., on the back surface of the cell wall 3a) that appears after exhaust gas in the PM filter 3 has passed through the cell wall. A coating of ceria (CeO₂) carrying Pd and Rh, or the like, may be used for the catalyst 4 that has the ability to store oxygen and is coated on the downstream side surface of the cell wall 3a.

A catalyst unit 5 such as a three-way catalyst is arranged in the exhaust passage 2 downstream of the PM filter 3. A monolith catalyst in which ceria (CeO₂) carrying Pt and Rh, or the like, may be used for the catalyst unit 5. The catalyst unit 5 has the ability to store oxygen.

In this example embodiment, the PM filter 3 is arranged on the upstream-most side of another catalyst that has the ability to store oxygen, such as the catalyst unit 5. That is, a catalyst with the ability to store oxygen is not arranged in the exhaust passage 2 upstream of the PM filter 3.

An ECU 6 that is an electronic control unit for controlling the internal combustion engine 1 is arranged together with the internal combustion engine 1 that is structured as described above. The ECU 6 is a unit that controls the operating state of the internal combustion engine 1 according to the operating conditions of the internal combustion engine 1 and the demands of a driver. Various sensors such as a crank position sensor and an accelerator position sensor are connected via electrical wiring to the ECU 6. Output signals from these various sensors are input to the ECU 6. The ECU 6 receives the output signals from the crank position sensor and the accelerator position sensor and the like, determines the operating state of the internal combustion engine 1, and then electrically controls the internal combustion engine 1 and the like based on the determined engine operating state.

For example, in addition to executing known control such as fuel injection control and the like, the ECU 6 also executes control to forcibly regenerate the PM filter 3 (hereinafter, this control will be referred to as "filter regeneration control"). Filter regeneration control is performed when PM of a specified amount or more is trapped in the PM filter 3.

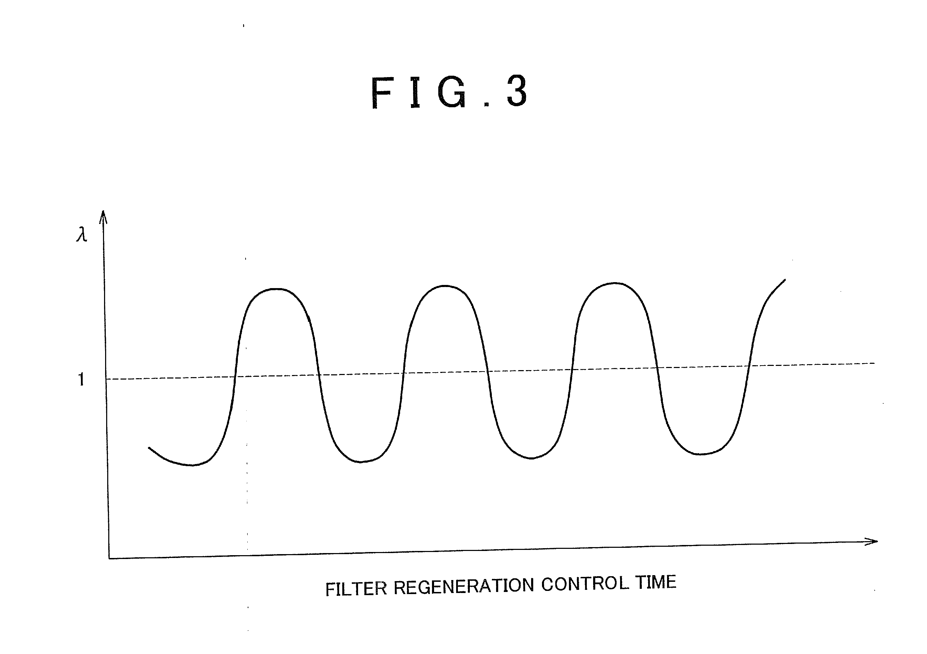

The filter regeneration control according to this example embodiment is control that, when PM of a specified amount or more is trapped in the PM filter 3, oxidizes (i.e., self-combusts) the PM accumulated in the PM filter 3 by increasing the temperature (i.e., heating) of the PM filter 3 to at least 580°C that is the PM self-combustion temperature (particulate matter self-combustion temperature) at which PM will self combust. This specific filter regeneration control forcibly alternately controls the air-fuel ratio of the exhaust gas discharged from the internal combustion engine 1 rich and lean, as shown in FIG. 3, when the temperature of the PM filter 3 estimated from the operating state of the internal combustion engine 1 is no less than (i.e., equal to or greater than) 350°C, that is an activation temperature of the PM filter 3, and no more than (i.e., equal to or less than) 780°C, that is an excessively high temperature. FIG. 3 is a view of exhaust gas air-fuel ratio control during filter regeneration control according to this example embodiment. As shown in FIG. 3, the exhaust gas air-fuel ratio is alternately controlled rich and lean within an oxygen storage capability range of all of the catalysts arranged in the exhaust passage 2, centered around λ = 1 (i.e., the stoichiometric air-fuel ratio). Here, during filter regeneration control, the estimated temperature of the PM filter 3 may be controlled to a predetermined temperature equal to or greater than the PM self-combustion temperature, using a map derived in advance.

If the estimated temperature of the PM filter 3 is lower than 350°C or higher than 780°C, this filter regeneration control, i.e., alternately controlling the exhaust gas air-fuel ratio rich and lean, will not be performed.

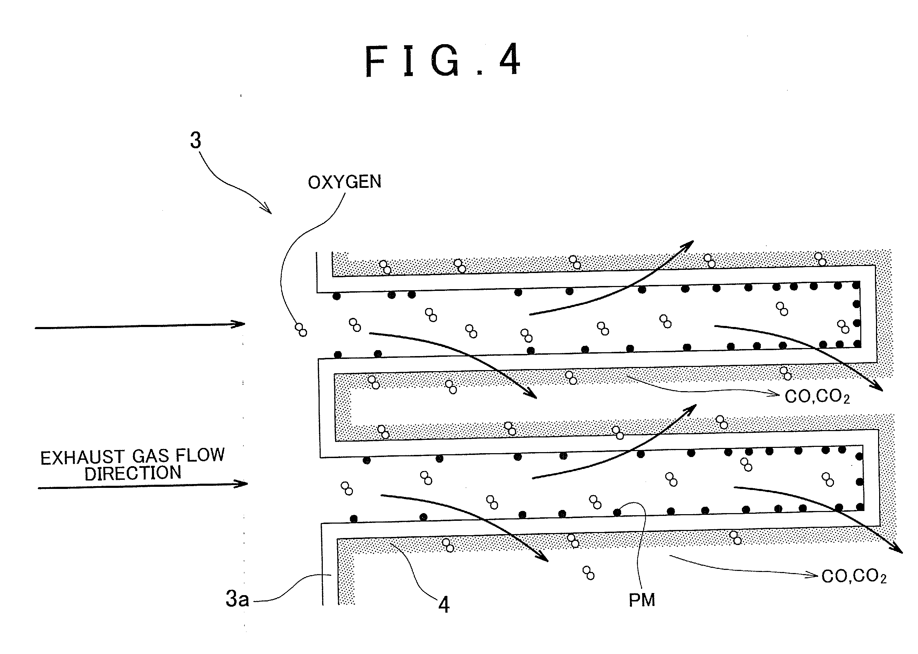

FIG. 4 is a view of the behavior of oxygen when filter regeneration control according to this example embodiment is executed. As shown in FIG. 4, when the filter regeneration control of this example embodiment is executed and the exhaust gas air-fuel ratio is controlled lean, the exhaust gas includes a large amount of oxygen. The large amount of oxygen that is included in the exhaust gas when the exhaust gas air-fuel ratio is controlled lean bonds with the PM, such that the PM is able to be oxidized, and is also supplied to and stored in the catalyst 4 that has the ability to store oxygen and is coated on the downstream side surface of the cell wall 3a of the PM filter 3. On the other hand, when the exhaust gas air-fuel ratio is controlled rich, the exhaust gas includes a large amount of reducing gas such as HC, CO, or H₂, for example, that is discharged from the internal combustion engine 1. The large amount of reducing gas that is included in the exhaust gas when the exhaust gas air-fuel ratio is controlled rich is supplied to the catalyst 4 that has the ability to store oxygen and is coated on the downstream side surface of the cell wall 3a of the PM filter 3. As a result, an oxidation reaction takes place between the reducing gas and the oxygen supplied to and stored in the catalyst 4 that has the ability to store oxygen and is coated on the downstream side surface of the cell wall 3a of the PM filter 3. This oxidation reaction generates oxidation reaction heat that enables the PM filter 3 to be heated early on. If the PM filter 3 is heated early on and the temperature of the PM filter 3 becomes equal to or greater than the PM self-combustion temperature (580°C), the large amount of oxygen that is included in the exhaust gas when the exhaust gas air-fuel ratio is controlled lean bonds with the PM and is thus consumed in the oxidation of the PM, thereby enabling the PM filter 3 to be regenerated early on. In this way, with this example embodiment, the PM filter 3 is able to be heated early on, so the PM filter is able to be regenerated early on.

In the example embodiment described above, a catalyst that has the ability to store oxygen is not arranged in the exhaust passage 2 upstream of the PM filter 3, so oxygen in the exhaust gas that has been discharged from the internal combustion engine 1 will not be stored or used in a reaction upstream of the PM filter 3. Therefore, the amount of oxygen that flows into the PM filter 3 can be ensured to the fullest. Also, the catalyst 4 that has the ability to store oxygen is coated on the downstream side surface of the cell wall 3a of the PM filter 3. Therefore, as described above, oxygen is first able to bond to the PM that, being unable to pass through the cell wall 3a of the PM filter 3, accumulated on the upstream side surface of the cell wall 3a (i.e., the front surface of the cell wall 3a). Moreover, PM is able to be oxidized if the temperature of the PM filter 3 is the PM self-combustion temperature. Also, oxygen not consumed in the oxidation of PM passes through the cell wall 3a of the PM filter 3 and is supplied to and stored in the catalyst 4 that has the ability to store oxygen and is coated on the downstream side surface of the cell wall 3a. As a result, the catalyst 4 that has the ability to store oxygen generates heat using the oxygen and the reducing gas in a reaction, so the PM filter 3 is able to be heated. In this way, when the PM filter 3 is heated using the oxygen that was not consumed in the oxidation of the PM in the PM filter 3, and the temperature of the PM filter 3 becomes equal to or higher than the PM self-combustion temperature, the oxygen that flows into the PM filter 3 is consumed in the oxidation of PM, so the PM filter 3 is able to be regenerated, and the oxygen is used efficiently. Therefore, the PM filter 3 is able to be regenerated by using the oxygen efficiently. Also, according to this example embodiment, an apparatus for heating the PM filter 3 without consuming oxygen, such as an electric heater, is not provided separately, so a cost increase is able to be suppressed.

In a second example embodiment of the invention, the PM filter 3 is heated earlier when filter regeneration control is executed. In this example embodiment, only the characteristic portions will be described. Descriptions of the other portions will be omitted.

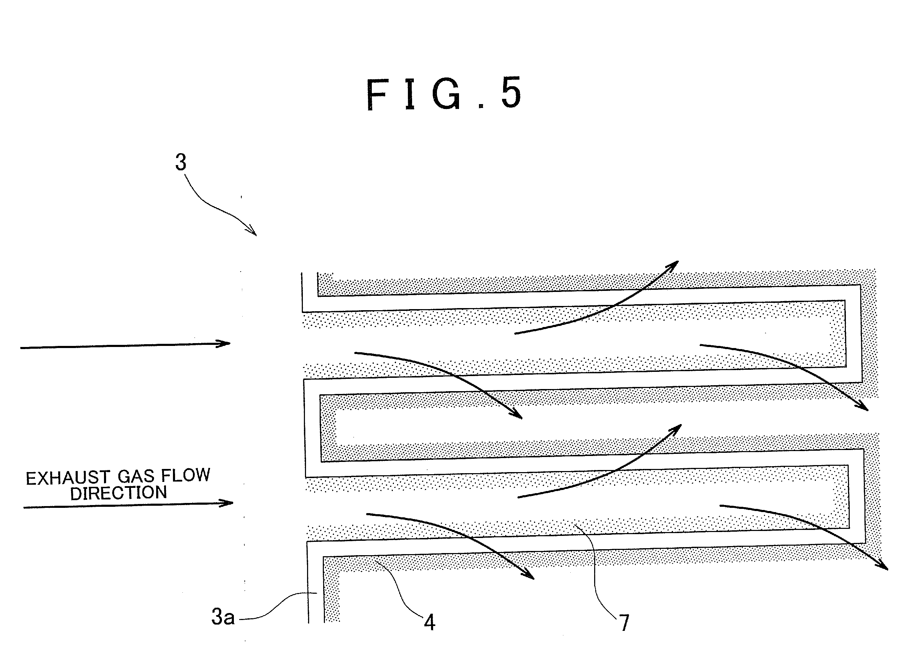

FIG. 5 is a detailed view of a PM filter 3 according to this example embodiment. As shown in FIG. 5, a catalyst 7 that does not have the ability to store oxygen is coated on an upstream side surface of a cell wall 3a that appears before exhaust gas in the PM filter 3 passes through the cell wall. A coating of Al₂O₃ carrying Pd and Rh, for example, may be used for the catalyst 7 that does not have the ability to store oxygen and is coated on the upstream side surface of the cell wall 3a. The catalyst 7 that does not have the ability to store oxygen is unable to store oxygen, so an oxidation reaction takes place when oxygen and a reducing gas such as HC, CO, or H₂ are simultaneously supplied, without much oxygen being consumed. As a result, with this example embodiment, the catalyst 7 that does not have the ability to store oxygen and is coated on the upstream side surface of the cell wall 3a of the PM filter 3 generates oxidation reaction heat, thereby enabling the PM filter 3 to be heated earlier, without consuming much oxygen. Also, similar to the first example embodiment, a catalyst 4 that has the ability to store oxygen is coated on the downstream side surface of the cell wall 3a that appears after exhaust gas in the PM filter 3 has passed through the cell wall. A coating of ceria (CeO₂) carrying Pd and Rh, for example, may be used for the catalyst 4 that has the ability to store oxygen and is coated on the downstream side surface of the cell wall 3a.

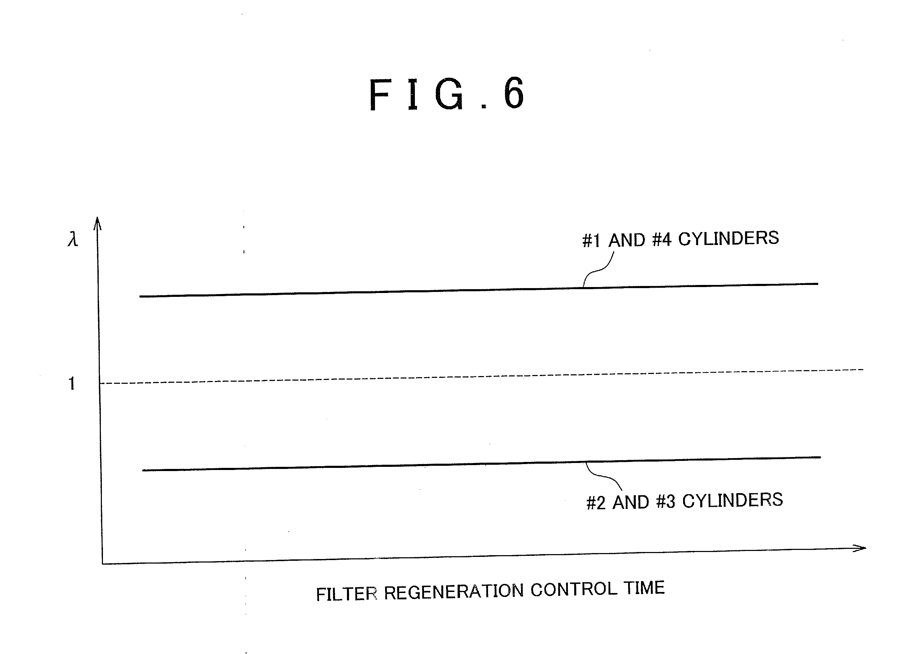

The filter regeneration control according to this example embodiment is control that, when PM of a specified amount or more is trapped in the PM filter 3, oxidizes (i.e., self combusts) the PM accumulated in the PM filter 3 by increasing the temperature of the PM filter 3 to at least 580°C that is the PM self-combustion temperature at which PM will self combust. This specific filter regeneration control controls at least one of the cylinders (#2 and #3 cylinders) of the internal combustion engine 1 such that the exhaust gas air-fuel ratio is richer than a target exhaust gas air-fuel ratio (stoichiometric air-fuel ratio : λ = 1), and controls the other cylinders (#1 and #4 cylinders) such that the exhaust gas air-fuel ratio is leaner than the target exhaust gas air-fuel ratio (stoichiometric air-fuel ratio : λ = 1), as shown in FIG. 6, when the temperature of the PM filter 3 that is estimated from the operating state of the internal combustion engine 1 is equal to or greater than 230°C, that is a catalyst light-off temperature of the PM filter 3, and less than 580°C, that is the PM self-combustion temperature. FIG. 6 is a view of exhaust gas air-fuel ratio control during filter regeneration control when the estimated temperature of the PM filter 3 is lower than the PM self-combustion temperature according to the second example embodiment. As shown in FIG. 6, the #2 and #3 cylinders are controlled to be richer than λ = 1 that is the stoichiometric air-fuel ratio, and the #1 and #4 cylinders are controlled to be leaner than λ = 1. This control will be referred to as cylinder-by-cylinder air-fuel ratio control.

Meanwhile, the filter regeneration control forcibly alternately controls the air-fuel ratio of the exhaust gas discharged from the internal combustion engine 1 rich and lean, as shown in FIG. 3, when the temperature of the PM filter 3 estimated from the operating state of the internal combustion engine 1 is equal to or greater than 580°C, that is the PM self-combustion temperature, and equal to or less than 780°C, that is an excessively high temperature. FIG. 3 is a view of exhaust gas air-fuel ratio control during filter regeneration control when the estimated temperature of the PM filter 3 is equal to or greater than the PM self-combustion temperature according to this example embodiment. As shown in FIG. 3, the exhaust gas air-fuel ratio is alternately controlled rich and lean within an oxygen storage capability range of all of the catalysts arranged in the exhaust passage 2, centered around λ, = 1 (i.e., the stoichiometric air-fuel ratio). This control will be referred to as rich / lean control. Here, during filter regeneration control, the estimated temperature of the PM filter 3 may be controlled to a predetermined temperature equal to or greater than the PM self-combustion temperature, using a map derived in advance.

If the estimated temperature of the PM filter 3 is lower than 230°C or higher than 780°C, this filter regeneration control will not be performed.

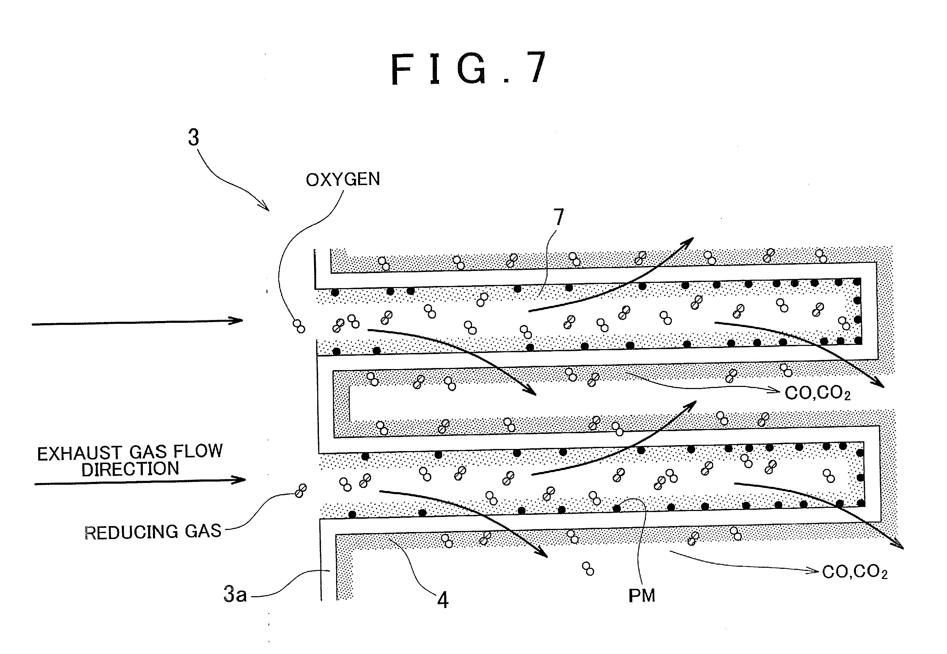

FIG. 7 is a view of the behavior of oxygen when filter regeneration control according to this example embodiment is executed when the estimated temperature of the PM filter 3 is lower than the PM self-combustion temperature. As shown in FIG. 7, when the filter regeneration control of this example embodiment is executed, first, when the estimated temperature of the PM filter 3 is lower than the PM self-combustion temperature, cylinder-by-cylinder air-fuel ratio control is executed, and the #2 and #3 cylinders are controlled so that the exhaust gas air-fuel ratio is richer than λ = 1, such that the exhaust gas includes a large amount of reducing gas such as HC, CO, or H₂, for example. Meanwhile, the #1 and #4 cylinders are controlled so that the exhaust gas air-fuel ratio is leaner than λ = 1, such that the exhaust gas includes a large amount of oxygen. This kind of exhaust gas that includes large amounts of both oxygen and reducing gas can be supplied to the PM filter 3. Here, the catalyst 7 that does not have the ability to store oxygen is unable to store oxygen, so an oxidation reaction takes place when oxygen and reducing gas are simultaneously supplied, without much oxygen being consumed. As a result, at the catalyst 7 that does not have the ability to store oxygen and is coated on the upstream side surface of the cell wall 3a of the PM filter 3, the large amounts of oxygen and reducing gas are simultaneously supplied so an oxidation reaction takes place, generating high oxidation reaction heat. Also, at the catalyst 4 that has the ability to store oxygen and is coated on the downstream side surface of the cell wall 3a of the PM filter 3 as well, large amounts of oxygen and reducing gas are simultaneously supplied so an oxidation reaction takes place, generating high oxidation reaction heat. As a result, the PM filter 3 is able to be heated earlier.

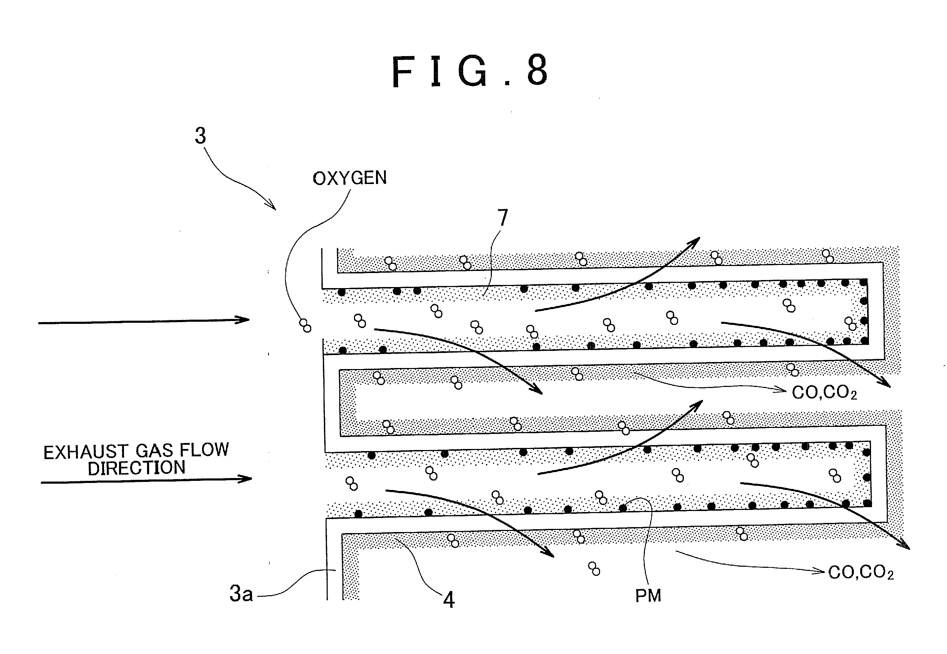

FIG. 8 is a view of the behavior of oxygen when filter regeneration control according to this example embodiment is executed when the estimated temperature of the PM filter 3 is equal to or greater than the PM self-combustion temperature. As shown in FIG. 8, with the filter regeneration control of this example embodiment, when the estimated temperature of the PM filter 3 is equal to or greater than the PM self-combustion temperature, rich / lean control is executed. When the exhaust gas air-fuel ratio is controlled lean, the exhaust gas includes a large amount of oxygen. The large amount of oxygen included in the exhaust gas when the exhaust gas air-fuel ratio is controlled lean is able to bond to the PM, and thus oxidize the PM; as well as be supplied to and stored in the catalyst 4 that has the ability to store oxygen and is coated on the downstream side surface of the cell wall 3a of the PM filter 3. On the other hand, when the exhaust gas air-fuel ratio is controlled rich, the exhaust gas includes a large amount of reducing gas such as HC, CO, or H₂, for example, that is discharged from the internal combustion engine 1. The large amount of reducing gas that is included when the exhaust gas air-fuel ratio is controlled rich is supplied to the catalyst 4 that has the ability to store oxygen and is coated on the downstream side surface of the cell wall 3a of the PM filter 3. As a result, an oxidation reaction takes place between the reducing gas and the oxygen supplied to and stored in the catalyst 4 that has the ability to store oxygen and is coated on the downstream side surface of the cell wall 3a of the PM filter 3. This oxidation reaction generates oxidation reaction heat that heats the PM filter 3, which enables the PM filter 3 to be kept at a high temperature. Also, the temperature of the PM filter 3 is equal to or greater than the PM self-combustion temperature, so the large amount of oxygen that is included in the exhaust gas when the exhaust gas air-fuel ratio is controlled lean bonds with the PM and is consumed in the oxidation of the PM, thereby enabling the PM filter 3 to be regenerated early on. At this time, the catalyst 7 that does not have the ability to store oxygen and is provided on the upstream side surface of the cell wall 3a promotes the oxidation reaction of the PM, so the PM filter 3 is able to be regenerated earlier.

In this way, with this example embodiment, the filter regeneration control is switched between the cylinder-by-cylinder air-fuel ratio control and the rich / lean control, with the PM self-combustion temperature as the threshold value, which enables the PM filter 3 to be heated even early, so the PM filter can be regenerated early on.

In a third example embodiment of the invention, the temperature distribution in the PM filter 3 is made uniform when filter regeneration control is executed. In this example embodiment, only the characteristic portions will be described. Descriptions of the other portions will be omitted.

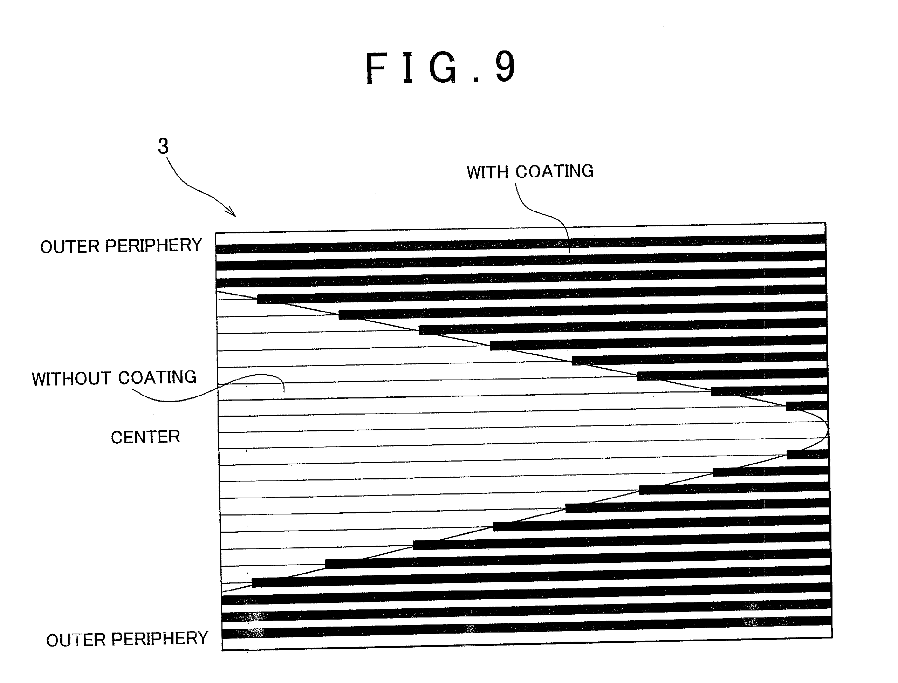

Similar to the second example embodiment, a catalyst 7 that does not have the ability to store oxygen is coated on an upstream side surface of the cell wall 3a that appears before exhaust gas in the PM filter 3 passes through the cell wall. A coating of Al₂O₃ carrying Pd and Rh, for example, may be used for the catalyst 7 that does not have the ability to store oxygen and is coated on the upstream side surface of the cell wall 3a. Also similar to the first and second example embodiments, a catalyst 4 that has the ability to store oxygen is coated on the downstream side surface of the cell wall 3a that appears after exhaust gas in the PM filter 3 has passed through the cell wall. A coating of ceria (CeO₂) carrying Pd and Rh, for example, may be used for the catalyst 4 that has the ability to store oxygen and is coated on the downstream side surface of the cell wall 3a. FIG. 9 is a view of the distribution of the catalyst 4 that has the ability to store oxygen in the PM filter 3 according to this example embodiment. As shown in FIG. 9, the coating amount of the catalyst 4 that has the ability to store oxygen is changed so that the temperature distribution in the PM filter 3 when filter generation control is executed is uniform. More specifically, the coating amount is less at the filter center portion in order to reduce the amount of heat generated so as to avoid an excessively high temperature. On the other hand, the coating amount is greater at the filter outer peripheral portion in order to increase the amount of heat generated so as to avoid the temperature from becoming low due to heat release. When the coating amount of the catalyst 4 that has the ability to store oxygen is changed so as to become less from the filter outer peripheral portion toward the filter center portion as described above, an excessively high temperature at the filter center portion of the PM filter 3 can be avoided so heat deterioration and damage can be inhibited. Also, PM can be efficiently burned off of the entire filter, without the temperature of the filter outer peripheral portion of the PM filter 3 becoming low, so residual PM after the filter regeneration control can be eliminated.

The filter regeneration control according to this example embodiment is control that, when PM of a specified amount or more is trapped in the PM filter 3, oxidizes (i.e., self combusts) the PM accumulated on the PM filter 3 by increasing the temperature of the PM filter 3 to equal to or greater than 580°C that is the PM self combustion temperature at which PM self combusts. This specific filter regeneration control controls at least one of the cylinders (#2 and #3 cylinders) of the internal combustion engine 1 such that the exhaust gas air-fuel ratio is richer than a target exhaust gas air-fuel ratio (stoichiometric air-fuel ratio : λ = 1), and controls the other cylinders (#1 and #4 cylinders) such that the exhaust gas air-fuel ratio is leaner than the target exhaust gas air-fuel ratio (stoichiometric air-fuel ratio : λ = 1), as shown in FIG. 6, when the temperature of the PM filter 3 that is estimated from the operating state of the internal combustion engine 1 is equal to or greater than 230°C, that is a catalyst light-off temperature of the PM filter 3, and lower than 580°C, that is the PM self-combustion temperature. FIG. 6 is a view of exhaust gas air-fuel ratio control during filter regeneration control when the estimated temperature of the PM filter 3 is lower than the PM self-combustion temperature according to this example embodiment. As shown in FIG. 6, the #2 and #3 cylinders are controlled to be richer than λ = 1 that is the stoichiometric air-fuel ratio, and the #1 and #4 cylinders are controlled to be leaner than λ = 1. This control will be referred to as cylinder-by-cylinder air-fuel ratio control.

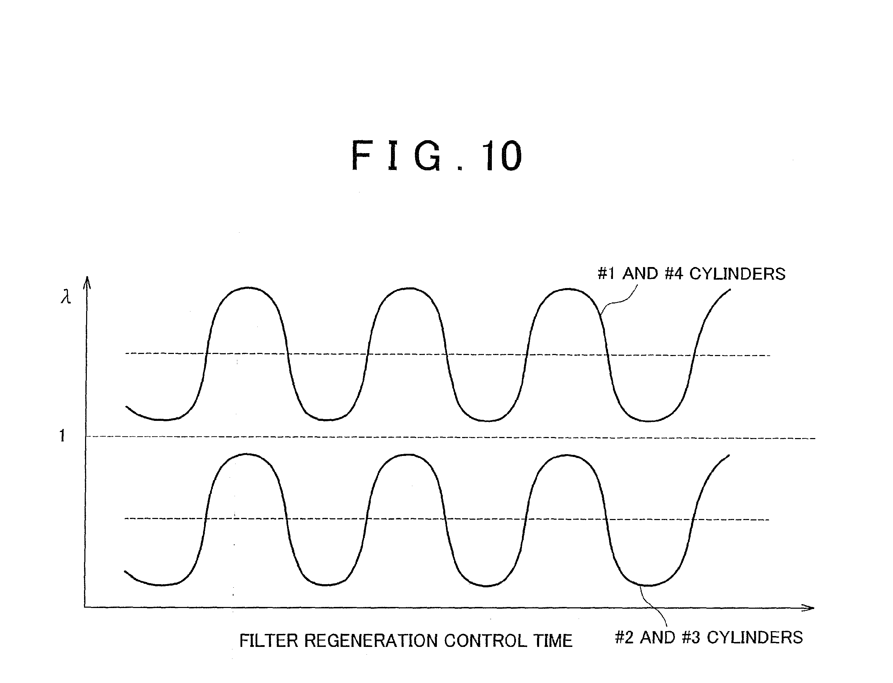

Meanwhile, the filter regeneration control forcibly alternately controls the air-fuel ratio of the exhaust gas discharged from the internal combustion engine 1 rich and lean around an exhaust gas air-fuel ratio value that is offset when the estimated temperature of the PM filter 3 is lower than the PM self-combustion temperature, as shown in FIG. 10, when the temperature of the PM filter 3 estimated from the operating state of the internal combustion engine 1 is equal to or greater than 580°C, that is the PM self-combustion temperature, and equal to or less than 780°C, that is an excessively high temperature. FIG. 10 is also a view of exhaust gas air-fuel ratio control during filter regeneration control when the estimated temperature of the PM filter 3 is equal to or greater than the PM self-combustion temperature according to this example embodiment. As shown in FIG. 10, the exhaust gas air-fuel ratio of the #2 and #3 cylinders is alternately controlled rich and lean within an oxygen storage capability range of all of the catalysts arranged in the exhaust passage 2, centered around a value that is richer than λ = 1 that is offset when the estimated temperature of the PM filter 3 is lower than the PM self-combustion temperature. Also, the exhaust gas air-fuel ratio of the #1 and #4 cylinders is alternately controlled rich and lean within an oxygen storage capability range of all of the catalysts arranged in the exhaust passage 2, centered around a value that is leaner than λ = 1 that is offset when the estimated temperature of the PM filter 3 is lower than the PM self-combustion temperature. This control simultaneously performs cylinder-by-cylinder air-fuel ratio control and rich / lean control. Here, during the simultaneous control of the cylinder-by-cylinder air-fuel ratio control and rich / lean control, the temperature of the entire filter is controlled by changing the difference between rich and lean that is the basis of the cylinder-by-cylinder air-fuel ratio control. Meanwhile, a low temperature portion that is the filter outer peripheral portion is heated by changing the amplitude of the rich / lean control.

When the estimated temperature of the PM filter 3 is lower than 230°C or higher than 780°C, this filter regeneration control is not performed.

FIG. 7 is a view of the behavior of oxygen during filter regeneration control when the estimated temperature of the PM filter 3 is lower than the PM self-combustion temperature according to this example embodiment. As shown in FIG. 7, when the filter regeneration control of this example embodiment is executed, first, when the estimated temperature of the PM filter 3 is lower than the PM self-combustion temperature, cylinder-by-cylinder air-fuel ratio control is executed, and the #2 and #3 cylinders are controlled so that the exhaust gas air-fuel. ratio is richer than λ = 1, such that the exhaust gas includes a large amount of reducing gas such as HC, CO, or H₂, for example. Meanwhile, the #1 and #4 cylinders are controlled so that the exhaust gas air-fuel ratio is leaner than λ = 1, such that the exhaust gas includes a large amount of oxygen. This kind of exhaust gas that includes large amounts of both oxygen and reducing gas can be supplied to the PM filter 3. Here, the catalyst 7 that does not have the ability to store oxygen is unable to store oxygen, so an oxidation reaction takes place when the oxygen and reducing gas are simultaneously supplied, without much oxygen being consumed. As a result, at the catalyst 7 that does not have the ability to store oxygen and is coated on the upstream side surface of the cell wall 3a of the PM filter 3, the large amounts of oxygen and reducing gas are simultaneously supplied so an oxidation reaction takes place, generating high oxidation reaction heat. Also, at the catalyst 4 that has the ability to store oxygen and is coated on the downstream side surface of the cell wall 3a of the PM filter 3 as well, large amounts of oxygen and reducing gas are simultaneously supplied so an oxidation reaction takes place, generating high oxidation reaction heat. As a result, the PM filter 3 is able to be heated earlier.

With the filter regeneration control of this example embodiment, when the estimated temperature of the PM filter 3 is equal to or greater than the PM self-combustion temperature, the cylinder-by-cylinder air-fuel ratio control and the rich / lean control are simultaneously executed. When the #1 and #4 cylinders are controlled so that the exhaust gas air-fuel ratio is lean, the exhaust gas includes an even larger amount of oxygen. This large amount of oxygen that is included in the exhaust gas when the exhaust gas air-fuel ratio is controlled lean is able to bond to the PM, and thus oxidize the PM, and is also supplied to and stored in the catalyst 4 that has the ability to store oxygen and is coated on the downstream side surface of the cell wall 3a of the PM filter 3. Meanwhile, when the #2 and #3 cylinders are controlled so that the exhaust gas air-fuel ratio is rich, the exhaust gas includes even more reducing gas such as HC, CO, or H₂, for example, that is discharged from the internal combustion engine 1. This large amount of reducing gas that is included in the exhaust gas when the exhaust gas air-fuel ratio is controlled rich is supplied to the catalyst 4 that has the ability to store oxygen and is coated on the downstream side surface of the cell wall 3a of the PM filter 3. As a result, an oxidation reaction takes place between the reducing gas and the oxygen supplied to and stored in the catalyst 4 that has the ability to store oxygen and is coated on the downstream side surface of the cell wall 3a of the PM filter 3, thus generating oxidation reaction heat. This oxidation reaction heat heats the PM filter 3, which enables the PM filter 3 to be kept at a high temperature. Also, the temperature of the PM filter 3 is equal to or greater than the PM self-combustion temperature, so the large amount of oxygen that is included in the exhaust gas when the exhaust gas air-fuel ratio of the #1 and #4 cylinders is controlled lean bonds with the PM and is consumed in the oxidation of the PM, thereby enabling the PM filter 3 to be regenerated earlier. At this' time, the catalyst 7 that does not have the ability to store oxygen and is provided on the upstream side surface of the cell wall 3a promotes the oxidation reaction of the PM, so the PM filter 3 is able to be regenerated earlier.

In this way, with this example embodiment, the filter regeneration control is switched between the cylinder-by-cylinder air-fuel ratio control and the simultaneous control of cylinder-by-cylinder air-fuel ratio control and rich / lean control, with the PM self-combustion temperature as the threshold value, which enables the PM filter 3 to be heated earlier, so the PM filter can be regenerated earlier.

The PM filter according to the invention is not limited to the example embodiments described above. That is, the PM filter of the invention may also be modified in various ways without departing from the scope of the invention. Also, the example embodiments described above are not only example embodiments of the PM filter, but also of a regeneration method for a PM filter.

## Claims

1. A particulate matter filter (3) that is provided in an exhaust passage (2) of an internal combustion engine (1) and that traps particulate matters in exhaust gas discharged from the internal combustion engine (1) when the exhaust gas passes through a wall portion (3a), **characterized in that** a catalyst that has an ability to store oxygen is not arranged in the exhaust passage (2) upstream of the particulate matter filter (3), and a catalyst (4) that has the ability to store oxygen is coated on a downstream side surface of the wall portion (3a) of the particulate matter filter (3).

2. The particulate matter filter (3) according to claim 1, wherein the particulate matter filter (3) is regenerated by an exhaust gas air-fuel ratio being alternately changed to a rich side and a lean side.

3. The particulate matter filter (3) according to claim 1 or 2, wherein a catalyst (7) that does not have the ability to store oxygen is coated on an upstream side surface of the wall portion (3a) of the particulate matter filter (3).

4. The particulate matter filter (3) according to claim 3, wherein cylinder-by-cylinder air-fuel ratio control is executed to regenerate the particulate matter filter (3) when a temperature of the particulate matter filter (3) is lower than a particulate matter self-combustion temperature, wherein in the cylinder-by-cylinder air-fuel ratio control, at least one of cylinders from among a plurality of cylinders of the internal combustion engine (1) is controlled such that an exhaust gas air-fuel ratio is richer than a target exhaust gas air-fuel ratio, and at least one other cylinder is controlled such that an exhaust gas air-fuel ratio is leaner than the target exhaust gas air-fuel ratio.

5. The particulate matter filter (3) according to claim 4, wherein the particulate matter self-combustion temperature is 580°C.

6. The particulate matter filter (3) according to claim 4 or 5, wherein the cylinder-by-cylinder air-fuel ratio control is not executed when the temperature of the particulate matter filter (3) is lower than a catalyst light-off temperature that is lower than the particulate matter self-combustion temperature, even if the temperature of the particulate matter filter (3) is lower than the particulate matter self-combustion temperature.

7. The particulate matter filter (3) according to claim 6, wherein the catalyst light-off temperature is 230°C.

8. The particulate matter filter (3) according to any one of claims 4 to 7, wherein the particulate matter filter (3) is regenerated by the exhaust gas air-fuel ratio being alternately changed to the rich side and the lean side when the temperature of the particulate matter filter (3) is higher than the particulate matter self-combustion temperature and equal to or lower than a temperature that is an excessively high temperature that is higher than the particulate matter self-combustion temperature.

9. The particulate matter filter (3) according to claim 8, wherein the temperature that is the excessively high temperature is 780°C.

10. The particulate matter filter (3) according to any one of claims 1 to 9, wherein the particulate matter filter (3) is such that a coating amount of the catalyst (4) that has the ability to store oxygen becomes less from a filter outer peripheral portion of the particulate matter filter (3) toward a filter center portion of the particulate matter filter (3).

11. A regeneration method for a particulate matter filter that is provided in an exhaust passage (2) of an internal combustion engine (1) and that traps particulate matters in exhaust gas discharged from the internal combustion engine (1) when the exhaust gas passes through a wall portion (3a), and in which a catalyst that has an ability to store oxygen is not arranged in the exhaust passage (2) upstream of the particulate matter filter (3), and a catalyst (4) that has the ability to store oxygen is coated on a downstream side surface of the wall portion (3a) of the particulate matter filter (3), **characterized by** comprising regenerating the particulate matter filter (3) by alternately changing an exhaust gas air-fuel ratio to a rich side and a lean side.

12. The regeneration method for a particulate matter filter according to claim 11, wherein the particulate matter filter (3) is such that a catalyst (7) that does not have an ability to store oxygen is coated on an upstream side surface of the wall portion (3a) of the particulate matter filter (3); and the particulate matter filter (3) is regenerated by controlling at least one of cylinders from among a plurality of cylinders of the internal combustion engine (1) such that an exhaust gas air-fuel ratio is richer than a target exhaust gas air-fuel ratio, and controlling at least one other cylinder such that an exhaust gas air-fuel ratio is leaner than the target exhaust gas air-fuel ratio, when a temperature of the particulate matter filter (3) is lower than a particulate matter self-combustion temperature.
